Europäisches Patentamt

**European Patent Office**

**Office européen des brevets**

(11) Publication number: **0 206 720**
A2

## EUROPEAN PATENT APPLICATION

(21) Application number: 86304630.6

(22) Date of filing: 16.06.86

(51) Int. Cl.⁴: **G 03 H 1/00, G 01 B 11/24,
A 61 C 19/04, A 61 C 13/08**

(30) Priority: 14.06.85 GB 8515183

(43) Date of publication of application: 30.12.86
Bulletin 86/52

(84) Designated Contracting States: **AT BE CH DE FR GB IT LI
LU NL SE**

(71) Applicant: **COUNCIL OF GOVERNORS OF THE UNITED
MEDICAL AND DENTAL SCHOOLS OF GUY'S AND ST.
THOMAS'S HOSPITALS**, London Bridge, London, SE1.
(GB)

(72) Inventor: **Butcher, Guy William**, Floor 27, Guy's Tower St
Thomas Street, London SE1 (GB)

(74) Representative: **Robinson, John Stuart et al, MARKS &
CLERK** 57/60 Lincoln's Inn Fields, London WC2A 3LS
(GB)

(54) Method of and apparatus for indexing an image.

(57) An apparatus for indexing an image comprises means
(2-9) for creating a three dimensional image in an image space
and a visible index marker (22) which is locatable in the image
space. The marker (22) may thus be positioned in the image
and its position when located at various features of the image
noted. The image is preferably created by laser holography in
which the reference beam for creating the hologram and the
beam for illuminating the hologram are collimated beams and
are incident at the same angle on the hologram.

# METHOD OF AND APPARATUS FOR INDEXING AN IMAGE

The present invention relates to a method of and apparatus for indexing an image. The invention may be used in archiving so as to reduce storage requirements by removing the need to store original models, articles, and the like. One specific application of the invention is in orthodontics, a branch of dentistry.

It is known to use holography in order to store and display three dimensional images of articles when the hologram is suitably illuminated. Holograms have been recorded and reconstructed using a divergent laser light source but this gives rise to distortion of the image. In particular, a divergent distorted image is reproduced.

In orthodontics, it is frequently necessary to make models of teeth and, because such models form part of a case history of a patient, they have to be stored for a substantial number of years. In fact, this is a legal requirement, at least in the U.K., and results in a need for substantial storage space for the models. Although photographic or stereo-photographic records of such models have been used, these are not entirely satisfactory as the photographic process results in prints which cannot be used to reveal all of the information which it may be desired to retain. For instance, measurements based on such prints tend to be inaccurate because of the effects of perspective and, even in the presence of a scale on the print, absolute measurements as well as relative measurements do not give adequate results.

A known application of holography in the field of dentistry is disclosed in USSR Author's Certificate No 1072855. This publication discloses a method of checking the correction of a set of teeth as stone or plaster models by means of a hologram which is used to generate an interference pattern on the models. The model to be examined is placed in the image space of a hologram of a model of the original condition and the interference pattern thus formed effectively provides contour lines on the model. This can be used to indicate the need for further correction or the effect of correction to the surface contours of the model.

According to a first aspect of the invention, there is provided a method of indexing an image, comprising the steps of:

creating a three dimensional image; and

0206720

3

locating a visible index mark in the three dimensional image.

Preferably the three dimensional image is produced by suitably illuminating a hologram and the index mark is located within the image.

Preferably the hologram is recorded by means of a collimated coherent reference light beam and is subsequently illuminated by means of a collimated coherent light beam incident on the hologram at the same angle as the reference beam.

Preferably the index mark is located or superimposed on one or more predetermined features of the image and the position of the mark is noted. For instance, the coordinates expressing the position of the mark may be entered into a data processor or stored in memory for subsequent processing. Conventional forms of processing such as distance measurement, magnification or reduction, rotation, and translation may be performed by data processing in order to obtain desired information.

According to a second aspect of the invention, there is provided an apparatus for indexing an image, comprising means for creating a three dimensional image in an image space and a visible index marker locatable in the image space.

Preferably the visible index marker is a substantially point-like light source. In order to achieve a sufficient degree of accuracy of location, the dimensions of the light source should be substantially smaller than features of the image which are to be indexed. The light source may, for instance, comprise a light and an optical fibre.

Preferably the light source is carried by a carrier which is movable in three orthogonal axes. The carrier may be coupled to three position encoders, for instance of the type comprising racks which move parallel to the three axes with movement of the carrier and which are coupled to corresponding rotary shaft encoders.

Preferably the means for creating the image comprises a holder for holding a hologram and means for illuminating the hologram. The illuminating means may be a laser and optical system for directing a collimated light beam at the holder.

Preferably the means for creating the image also constitutes means for recording the image, for instance a holographic camera for exposing a photographically

0206720

5

sensitized carrier, for instance photographic film,
placed in the holder and having an object carrier
locatable in the path of light incident on the film for
transmission holography or in the path of light which
has passed through the film for reflection holography.
By using the same apparatus for both recording and
illuminating the hologram, the reference beam and
illuminating beam inevitably have the same angle of
incidence on the film so that the perspective and metric
of the original object are accurately preserved in the
holographic image.

Preferably the holder comprises parallel transparent
plates arranged to receive the hologram therebetween.

The visible index mark may comprise the light source
itself or may comprise an image of the light source, for
instance produced by reflection in the transparent
plates of the hologram holder.  It is merely necessary
that the mark can be visibly identified as essentially
an index point within the three dimensional image, the
position of the mark corresponding either directly or by
means of its image to the feature or position of the
three dimensional image at which it is located.
Although it is preferred to use a light source as the
index mark, any suitable mark which can be visually
identified when located, or when its image is located, within the three dimensional image is suitable.

One application of the invention is in storing representations of models used in orthodontics. Measurements corresponding to such a model can be obtained from the recorded holographic images by locating and indexing one or more landmarks of the image.

Although it is convenient to use parallel light beams for recording and illuminating holograms, this is not essential in order to preserve metric and perspective. Thus, in general, the hologram is illuminated with a light beam which is substantially congruent with the reference beam used to record the hologram. In the case of a divergent reference beam, for instance, the hologram is illuminated by an identical divergent beam which is incident on the hologram in the same way as was the reference beam. This may conveniently be achieved by using the same apparatus to record and illuminate the hologram. The perspective and metric of the object may thus be preserved in the holographic image without using collimated reference and illuminating beams.

It is thus possible to provide accurate three dimensional images in holographic form which are suitable for archiving. For instance, models of teeth or the like may be used merely to record a hologram which is then stored as part of a patient case history in place of the model, which can be disposed of. Because the metric of the model is preserved in the holographic image, it is possible to obtain any desired information from the hologram and the need for costly and inconvenient storage of models is eliminated. Also, it is possible to make measurements which would be inconvenient with actual models. The holographic image may be compared with models made subsequently or with holograms of models made subsequently in order to monitor changes, for instance during a course of dental treatment.

However, the invention is not limited to such orthodontic application but may be used wherever appropriate to remove the need to store models, samples, products, and the like.

The invention will be further described, by way of example, with reference to the accompanying drawings, in which:

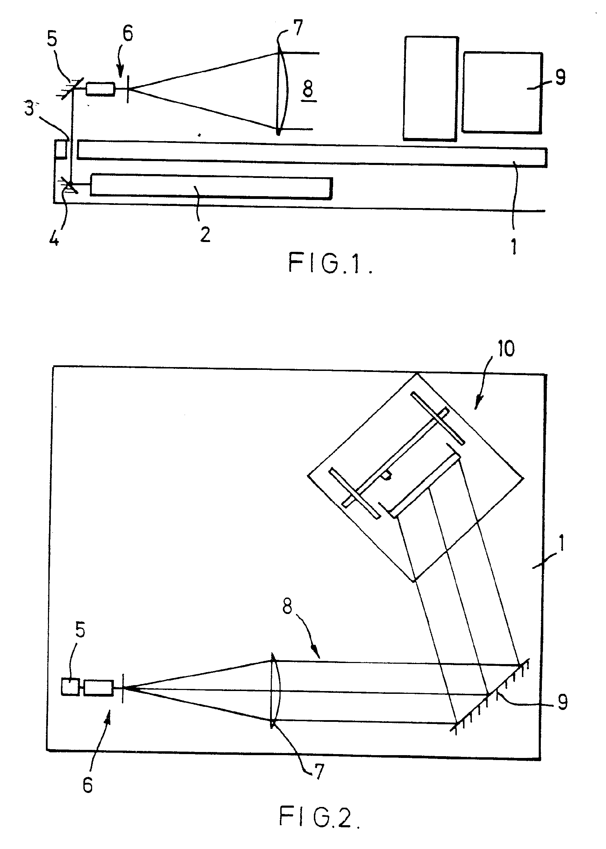

Figure 1 is a diagramatic side view of an apparatus constituting a preferred embodiment of the invention;

Figure 2 is a diagramatic plan view of the apparatus of Figure 1;

Figure 3 is a diagramatic perspective view of part of the apparatus of Figure 1; and

Figure 4 is a schematic diagram of part of the apparatus of Figure 1.

The apparatus shown in the drawings is intended for use in recording holograms of models of teeth, for illuminating such holograms, and for permitting measurements to be made on the holographic images. However, the apparatus is also suitable for such operations in respect of other articles with little or no modification.

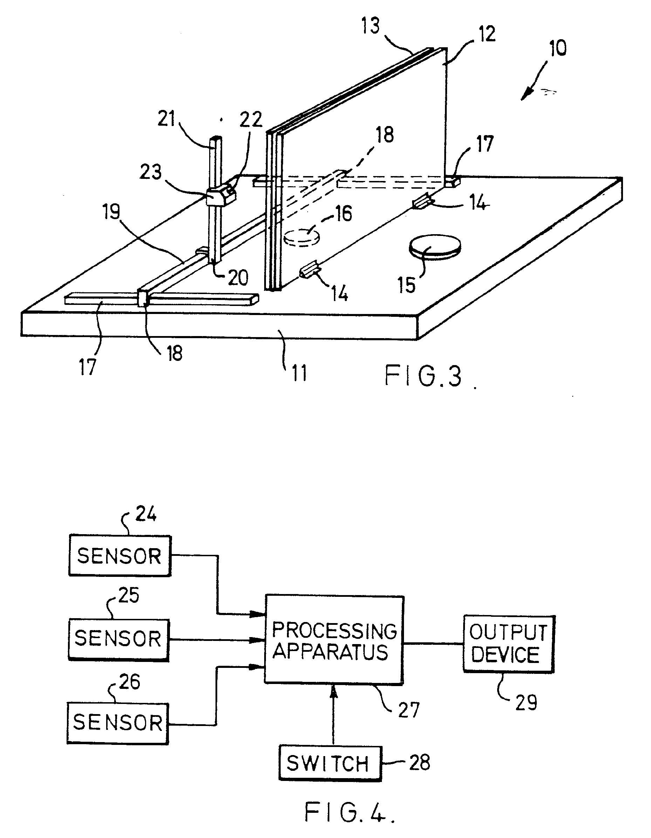

The apparatus comprises a base 1 which supports all of the other components of the apparatus. A continuous wave helium-neon laser 2 is located, together with its associated power supply and control elements, below the base. A laser output of 25 milliwatts has been found to be adequate. The light beam produced by the laser 2 is deflected through a hole 3 in the base 1 by a plane front-silvered mirror 4 and is deflected by a second plane front-silvered mirror 5 so that the deflected beam is parallel to the upper surface of the base 1. The reflected light beam passes through a spatial filter and microscope objective 6, and emerges as a divergent beam. This beam is incident on the plane surface of a plano-convex collimating lens 7 which produces a collimated or parallel beam 8 of coherent monochromatic light. The beam 8 is reflected by a plane front-silvered mirror 9 towards an assembly 10 which is shown in greater detail in Figure 3.

The assembly 10 comprises a base plate 11 which is mounted on the base 1. The base plate 11 carries a film or hologram holder made up of first and second sheets 12 and 13 of glass. The sheet 13 is fixed to the base plate 11 whereas the sheet 12 is connected to the base plate by hinges 14 so as to permit insertion and removal of a film or hologram. Two object carriers 15 and 16 are shown in Figure 3 located on opposite sides of the holder. The carrier 15 is disposed on the side of the holder nearer the mirror 9 and is used for carrying or holding an object when making transmission holograms, whereas the carrier 16 is disposed on the other side of the holder for supporting an object when making reflection holograms.

Two guides 17 are fixed to the base plate 11 on the same side of the holder as the carrier 16. The guides are parallel to each other and located adjacent opposite edges of the base plate. The guides 17 extend generally perpendicularly to the plane of the glass sheet 13 and support a pair of carriages 18 for movement therealong. One of the carriages 18 operates a position or displacement sensor.

The carriages 18 are mounted at opposite ends of a transverse guide 19 which extends perpendicularly to the guides 17. A further carriage 20 is slidable along the further guide 19 and is connected to a position or displacement sensor. The further carriage 20 is fixed to the lower end of an upstanding guide 21 which is perpendicular to the guides 17 and the further guide 19.

A light source is indicated at 22 and is, for instance, constituted by a light emitter and a small iris such as a circular iris having a diameter of 100 microns or by an optical fibre. The light source 22 thus essentially constitutes a point-source of light. The light source is provided in a carriage 23 which is movable along the upstanding guide 21 and which is connected to another position or displacement sensor.

The position or displacement sensors for the carriages 18, 20, and 23 are shown diagramatically in Figure 4 at 24, 25, and 26, respectively, and each comprises a rack which moves with the carriage and meshes with a pinion on the shaft of a rotary shaft encoder. The sensors are connected to a data processing apparatus 27 which may be in the form of a microprocessor. A manually operable switch 28 is provided for entering coordinates from the sensors into the apparatus 27. The apparatus is arranged to store the coordinates and to perform various processing of the stored data such as display, distance measurement between any two sets of coordinates, magnification or reduction, rotation, and translation. An output device 29, such as a display, is provided for supplying the results of such processing.

The apparatus is capable of recording holograms and, for this purpose, a film carrying an essentially conventional photographic emulsion is placed between the glass sheets 12 and 13. An object, such as a model of teeth or the like, is placed on one of the carriers 15 and 16 depending on whether a transmission or reflection hologram is required. The laser 2 is then actuated so that the beam 8 of collimated light is reflected by the mirror 9 onto the photographic film as a reference beam. Light reflected from the object is also incident on the film and an interference pattern is set up and recorded within the photographic emulsion in the manner well-known in the art of holography. When the emulsion has been suitably exposed, it is removed from between the glass sheets 12 and 13 and is processed in a conventional manner.

When it is desired to view the holographic image, the processed film which constitutes the hologram is placed between the glass sheets 12 and 13 and illuminated by the collimated beam 8 derived from the laser 2. The illuminating beam is thus incident on the hologram at precisely the same angle as was the reference beam during recording of the hologram. In the case of a transmission hologram, the three dimensional holographic image appears in front of the hologram, that is on the side of the hologram nearer the viewer/laser source (virtual image) whereas, for a reflection hologram, the image appears behind the hologram (real image). Because a collimated beam is used for recording and illumination and because the illuminating beam is incident on the hologram at the same angle as the reference beam, the perspective and metric of the holographic image is substantially identical to that of the object so that shape, size, and contour information is accurately preserved.

The hologram may be viewed from either side of the glass sheets 12 and 13 as convenient. In order to locate features or "landmarks" of the holographic image in three dimensions, the light source 22 can be placed in the image of a reflection hologram when viewed from the same side of the sheets 12 and 13 as the carrier 15. Thus, the light source 22 is moved into correspondence with the feature to be indexed by sliding the carriers 18, 20, and 23 along the guides 17, 19, and 21 until the light source 22 is effectively superposed on the image feature. The encoders 24, 25, and 26 then supply signals indicative of the position of the light source 22, and hence the image feature, with respect to a three dimensional orthogonal (Cartesian) coordinate system. The switch 28 is actuated so as to enter these coordinates in the processing apparatus 27. It is, of course, possible to substitute a different coordinate system arrangement, such as spherical or cylindrical coordinates, by modifying the mounting arrangement of the light source 22.

In the case of a reflection hologram viewed from the same side of the plates 12 and 13 as the carrier 16, the holographic image appears to lie above the carrier 15 and features of the image are indexed by placing the image of the light source 22 caused by reflection of the light source in the sheets 12 and 13 in superposition with the image feature. Because the glass sheets 12 and 13 present several reflective surfaces to the light source 22 when viewed from the same side of the sheets as the light source, it is necessary to identify uniquely one of these images as an index mark. However, the multiple images are not a disadvantage as they assist in locating the relatively small image. Thus, the light source 22 is moved such that the selected image of the light source coincides with or is superimposed on the feature to be indexed. The encoders will then provide a signal or data indicative of the location of the image feature.

In order to modify the apparatus shown in the drawings to allow indexing of transmission holograms, it is merely necessary to arrange for the light source 22 to be visible on the same side of the sheets 12 and 13 as the viewer and the holographic image.

Data supplied by the encoders is digitally stored and processed as desired in the apparatus 27 in order to obtain useful information about the object whose image has been holographically recorded. For instance, distances between several landmarks which are indexed using the apparatus are calculated. Further dataprocessing including magnification or reduction, translation, and rotation may also be performed.

In the field of orthodontics and dentistry, it is thus possible to dispense with expensive and inconvenient storage of models of teeth and rely instead on holograms which are convenient and cheap to store, for instance in a patient file with other documents. Because the holographic image represents an accurate reproduction of the shape of the object, little or no information is lost by dispensing with the model and relying on the hologram. In particular, measurement of the holographic image is possible and, in some situations, more easily performed by the apparatus, and direct entry into digital processing apparatus may be made substantially automatic. It has been found that measurements made in this way can be more accurate than measurements made conventionally.

Similarly, storage of many other types of article can be dispensed with by using the apparatus to provide an accurate holographic record of the object. Thus, archiving is greatly facilitated and storage problems dramatically reduced by means of the apparatus.

<u>CLAIMS</u>

1. A method of indexing an image, comprising the steps of:

creating a three dimensional image; and

locating a visible index mark in the three dimensional image.

2. A method as claimed in claim 1, characterised in that the three dimensional image is created by illuminating a hologram.

3. A method as claimed in claim 2, characterised by a preliminary step of creating the hologram by exposing an object and a substantially planar photographic recording medium to a first collimated coherent reference light beam incident on the recording medium at a predetermined angle, and characterised in that the three dimensional image is created by illuminating the hologram by means of a second collimated coherent reference light beam incident on the hologram at the predetermined angle.

4. An apparatus for indexing an image, characterised by comprising means (2-9) for creating a three dimensional image in an image space and a visible index marker (22) locatable in the image space.

5. An apparatus as claimed in claim 4, characterised in that the visible index marker (22) is a point-like light source.

6. An apparatus as claimed in claim 5, characterised in that the point-like source comprises a light coupled to an optical fibre.

7. An apparatus as claimed in any one of claims 4 to 6, characterised in that the visible index marker is carried by a carrier (23) which is movable in three mutually orthogonal axes.

8. An apparatus as claimed in claim 7, characterised in that the carrier (23) is coupled to position encoding means for providing signals indicative of the position of the visible index marker in the image space with respect to the three axes.

9. An apparatus as claimed in any one of claims 4 to 8, characterised in that the image creating means comprises a holder (12, 13) for holding a hologram and means (2-9) for illuminating the hologram.

10. An apparatus as claimed in claim 9, characterised in that the illuminating means comprises a laser (2) for producing a laser beam and an optical system (3-9) for converting the laser beam into a collimated light beam directed at the holder (12,13).

FIG.1.

FIG.2.

FIG.3.

FIG.4.